# EUROPÄISCHE PATENTANMELDUNG

(11) **EP 1 818 698 A1**
(43) Veröffentlichungstag der Anmeldung: **15.08.2007**
(21) Anmeldenummer: 07105393.8
(22) Anmeldetag: 17.07.2006
(51) Int. Cl.: G02B 6/00, F21V 8/00

(54) **Beleuchtungseinrichtung für ein reflektierendes Schild, beleuchtete Schildanordnung sowie Halter**

(30) Priorität: 25.07.2005 DE 102005035232
(62) Teilanmeldung aus: 06775707.0
(71) Anmelder: Erich Utsch AG, 57080 Siegen (DE)
(72) Erfinder: Wurmbach, Lothar, 57074 Siegen (DE); Pfundstein, Bernd, 35630 Ehringshausen (DE)
(74) Vertreter: Vorberg, Jens

(57) **Zusammenfassung**

Gegenstand der Erfindung ist ein Halter 1 für ein Kfz-Kennzeichenschild 2, mit einem geschlossenen Gehäuse 10 und einer darin angeordneten Beleuchtungseinrichtung 20, wobei die Beleuchtungseinrichtung (20) eine oder mehrere Lichtquellen 22 umfasst, deren Licht in einen flächenhaft ausgedehnten Lichtleiter 24 eingekoppelt wird, der vorderseitig vor dem Kfz-Kennzeichenschild 2 angeordnet ist. Der Halter umfasst 1 eine rückwärtige Montageplatte 30, die zur Montage an einem Kfz vorgesehen ist, sowie eine Kennzeichenschildeinheit (40). Diese bildet ein geschlossenes Gehäuse 10 zur abgedichteten Aufnahme der Beleuchtungseinrichtung 20 sowie des Kfz-Kennzeichenschilds 2 aus und ist dazu eingerichtet, lösbar mit der rückwärtigen Montageplatte 30 verbunden zu werden.

## Beschreibung

Gegenstand der vorliegenden Erfindung ist ein Halter für ein Kfz-Kennzeichenschild mit einem geschlossenen Gehäuse und einer darin angeordneten Beleuchtungseinrichtung. Das geschlossene Gehäuse, welches vom Halter ausgebildet wird, ist zur Aufnahme eines Kfz-Kennzeichenschildes vorgesehen, wobei es sich bei dem Kfz-Kennzeichenschild insbesondere um ein Kfz-Kennzeichenschild mit geprägter metallischer Platine, wie es beispielsweise in Deutschland gesetzlich vorgeschrieben ist, handeln kann.

Zum heutigen Tag ist bereits eine Mehrzahl gattungsgemäßer Halter für Kfz-Kennzeichenschilder bekannt, die eine integrierte Beleuchtungseinrichtung zur Beleuchtung der Legende des gehaltenen Kfz-Kennzeichenschildes aufweisen. Beispielhaft hierfür sei die DE 102 58 465 A1 der Toyoda Gosei Co. Ltd., Japan, genannt, aus der eine Beleuchtungsvorrichtung bekannt ist, die in einer Ausführungsform einen gattungsgemäßen Halter für ein Kfz-Kennzeichenschild ausbildet. Als zweite Ausführungsform offenbart diese Patentanmeldung einen Kfz-Kennzeichenhalter, der ein geschlossenes Gehäuse ausbildet, in welchem ein zu haltendes und zu beleuchtendes Kfz-Kennzeichenschild angeordnet werden kann. Vorderseitig vor dem gehaltenen Kfz-Kennzeichenschild ist ein flächenhaft ausgedehnter Lichtleiter angeordnet, in den von einer Seitenfläche ausgehend mittels einer Mehrzahl von Lichtquellen Licht eingekoppelt wird. Vorderseitig ist der Lichtleiter mit einer Lichtauskoppelschicht versehen, die einer gezielten homogenen Auskopplung des im Lichtleiter unter Ausnutzung des Effekts der internen Totalreflektion geführten Lichts dient.

Nachteilig an dem aus der DE 102 58 465 A1 bekannten Halter für ein Kfz-Kennzeichenschild ist jedoch, dass das vom Halter ausgebildete Gehäuse nur ungenügend gegen Witterungseinflüsse abgedichtet ist, wie sie typisch bei der praktischen Verwendung eines gattungsgemäßen Halters auftreten. Auch ist die Vorderfläche des Gehäuses, in welchem das Kfz-Kennzeichenschild und die Beleuchtungseinrichtung angeordnet sind, und welche von der Lichtauskoppelschicht gebildet wird, nur ungenügend gegen Beschädigung gesichert, so dass beim Auftreten einer mechanischen Beschädigung dieser Vorderfläche eine unerwünschte stark inhomogene Lichtauskopplung aus der Vorderfläche auftreten kann.

Aufgabe der vorliegenden Erfindung ist es daher, einen Halter der vorgenannten Art für ein Kfz-Kennzeichenschild anzugeben, der die erwähnten Nachteile vermeidet.

Gelöst wird diese Aufgabe durch einen Halter für ein Kfz-Kennzeichenschild mit den Merkmalen des Hauptanspruchs.

Ein erfindungsgemäßer Halter für ein Kfz-Kennzeichenschild umfasst ein geschlossenes Gehäuse und eine darin angeordnete Beleuchtungseinrichtung. Die Beleuchtungseinrichtung umfasst eine oder mehrere Lichtquellen, deren Licht in einen flächenhaft ausgedehnten Lichtleiter eingekoppelt wird. Weiterhin ist das Gehäuse, welches vom Halter ausgebildet wird, dazu vorgesehen, ein zu haltendes Kfz-Kennzeichenschild aufzunehmen und zu umschließen. Der ausgedehnte Lichtleiter ist dabei vorderseitig des Kfz-Kennzeichenschilds angeordnet.

Weiter umfasst der Halter für ein Kfz-Kennzeichenschild gemäß der vorliegenden Erfindung eine rückwärtige Montageplatte, die zur Montage und zum Verbleib an einem Kfz vorgesehen ist, wobei für die Montage insbesondere eine Verschraubung in Frage kommt.

Weiterhin umfasst der Halter eine Kennzeichenschildeinheit, die ein geschlossenes Gehäuse zur abgedichteten Aufnahme der Beleuchtungseinrichtung und des Kfz-Kennzeichenschildes ausbildet. Diese Kennzeichenschildeinheit ist dazu eingerichtet, lösbar mit der rückwärtigen Montageplatte verbunden zu werden.

In einer besonders vorteilhaften Weiterbildung des erfindungsgemäßen Halters bildet die Kennzeichenschildeinheit einen Rahmen aus, in den das zu haltende Kfz-Kennzeichenschild über eine Zutrittsöffnung eingelegt werden kann. Weiterhin ist ein Deckel vorgesehen, der Teil der Kennzeichenschildeinheit ist, wobei der Deckel dazu vorgesehen ist, die Zutrittsöffnung zum Rahmen nach Einlegen des zu haltenden Kfz-Kennzeichenschilds abdichtend zu verschließen.

Hier ergeben sich besondere Vorteile, wenn der Rahmen der Kennzeichenschildeinheit eine die Zutrittsöffnung umgreifende Dichtleiste ausbildet. Weiterhin bildet der Deckel vorteilhaft eine Aufnahmenut aus, die ebenfalls umlaufend ausgestaltet ist und dazu vorgesehen ist, die Dichtleiste des Rahmens in sich aufzunehmen. Dichtleiste und Aufnahmenut sind dergestalt komplementär ausgebildet, dass die Dichtleiste formschlüssig in die Aufnahmenut eingreifen kann. Hierdurch ergibt sich eine abgedichtete mechanische Verbindung zwischen dem Deckel und dem Rahmen der Kfz-Kennzeichenschildeinheit.

Besondere Vorteile ergeben sich, wenn der Rahmen aus einem oder mehreren spritzgießfähigen Thermoplasten wie beispielsweise ABS hergestellt ist. Der Deckel der Kennzeichenschildeinheit hingegen besteht vorteilhaft aus einem Kunststoff, der eine gegenüber den Thermoplasten des Rahmens erhöhte Elastizität aufweist. Als besonders geeignet hierfür haben sich aliphatische thermoplastische Polyurethane erwiesen.

In einer vorteilhaften Ausgestaltung des erfindungsgemäßen Halters ist der Rahmen der Kennzeichenschildeinheit zumindest zweiteilig aufgebaut und weist eine vorderseitig angeordnete Blende und einen rückseitig angeordneten Halter auf. Blende und Halter des einsatzfertig konfektionierten erfindungsgemäßen Halters sind dabei fest miteinander verbunden, insbesondere mittels Verschweißung. Vor der Verbindung von Blende und Halter wird zwischen beiden Teilen die Beleuchtungseinrichtung angeordnet, so dass die Beleuchtungseinrichtung bei der Herstellung der Verbindung zwischen Blende und Halter mechanisch im Rahmen festgelegt wird.

Besondere Vorteile bei der praktischen Verwendung des erfindungsgemäßen Halters ergeben sich, wenn die Kennzeichenschildeinheit lösbar mit der Montageplatte verbunden werden kann. Besonders vorteilhaft ist es, wenn die mechanische Verbindung zwischen Kennzeichenschildeinheit und Montageplatte nur mittels Werkzeug gelöst werden kann. Hierzu können in der Kennzeichenschildeinheit eine oder mehrere Zutrittsöffnungen ausgebildet werden, durch die Werkzeug zur Lösung im Inneren des erfindungsgemäßen Halters vorgesehener Verriegelungselemente eingeführt werden kann.

Schließlich können besondere Vorteile realisiert werden, wenn der flächenhaft ausgedehnte Lichtleiter, welcher in der Kennzeichenschildeinheit angeordnet ist, oberseitig von einer transparenten, vorzugsweise mechanisch hoch belastbaren Schutzscheibe abgedeckt ist. Diese Schutzscheibe wird dabei vorteilhaft so oberhalb des Lichtleiters angeordnet, dass ein Übertritt des im Lichtleiter geführten Lichts in die Schutzscheibe vermieden wird. Auf diese Weise können durch erhöhte Auskopplung verursachte unerwünschte "Lichthofeffekte" um Beschädigungen, die im praktischen Einsatz des erfindungsgemäßen Halters unvermeidlich in der Schutzscheibe auftreten, sicher vermieden werden. Wird die transparente Schutzscheibe zusätzlich oberseitig hartvergütet, so kann einerseits die Reflektivität der vorderen Eintrittsfläche des erfindungsgemäßen Halters deutlich vermindert werden, andererseits kann die mechanische Belastbarkeit, hier insbesondere die Kratzfestigkeit der transparenten Schutzscheibe nochmals deutlich erhöht werden.

Weitere Merkmale und Vorteile des erfindungsgemäßen Halters ergeben sich aus den Unteransprüchen sowie dem Ausführungsbeispiel, welches nunmehr anhand der Zeichnung näher erläutert wird. Das Ausführungsbeispiel soll den Fachmann in die Lage versetzen, den erfindungsgemäßen Halter praktisch zu realisieren und ist nur beispielhaft und nicht einschränkend zu verstehen. In der Zeichnung zeigen:
- Fig. 1: zeigt eine perspektivische Teilschnittansicht eines erfindungsgemäßen Halters mit gehaltertem Kfz-Kennzeichenschild,
- Fig. 2: eine vergrößerte Ansicht des Schnitts durch den erfindungsgemäßen Halters aus Fig. 1,
- Fig. 3: eine Teilschnittansicht durch den unteren Rand des erfindungsgemäßen Halters aus Fig. 1,
- Fig. 4: eine Teilschnittansicht durch den oberen Rand des erfindungsgemäßen Halters aus Fig. 1.,
- Fig. 5: eine perspektivische Teilansicht der Montageplatte des erfindungsgemäßen Halters aus Fig. 1 in Draufsicht,
- Fig. 6: ein vergrößerter Ausschnitt aus Fig. 5,
- Fig. 7: eine unterseitige Ansicht der Montageplatte aus Fig. 5 und
- Fig. 8: eine vergrößerte Teilansicht des Lichtleiters des erfindungsgemäßen Halters aus Fig. 1, aufgesetzt auf ein zu haltendes Kfz-Kennzeichenschild.

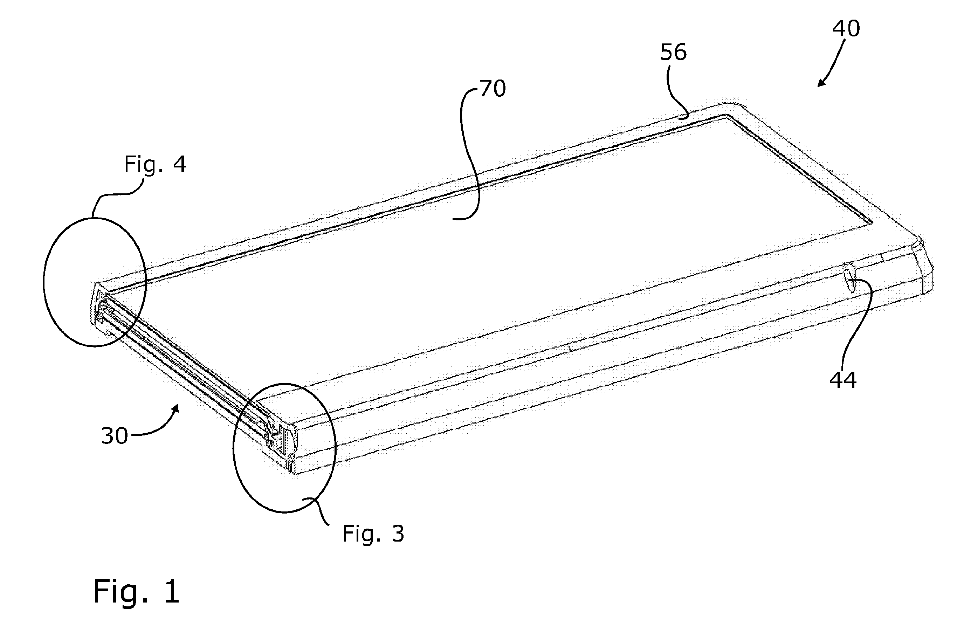

Figur 1 zeigt eine Teilschnittansicht durch einen erfindungsgemäßen Halter 1 für ein Kfz-Kennzeichenschild 2 in perspektivischer Darstellung. Der erfindungsgemäße Halter 1 weist eine unterseitige Montageplatte 30 auf, die beispielsweise im Spritzgussverfahren aus einem schlagzähen Thermoplasten wie ABS hergestellt werden kann. Mit der rückwärtigen Montageplatte 30, die zur Montage an einem Kfz vorgesehen ist und auf deren Aufbau im folgenden noch weiter eingegangen werden wird, ist oberseitig eine Kennzeichenschildeinheit 40 angeordnet, die unverlierbar mit der Montageplatte 30 verbunden ist, wobei die Verbindung zwischen der Montageplatte 30 und der Kennzeichenschildeinheit 40 mittels Werkzeug beschädigungsfrei gelöst werden kann. Innerhalb der Kennzeichenschildeinheit 40, welche ein geschlossenes Gehäuse 10 ausbildet, ist ein Kennzeichenschild 2 gehaltert.

Das Gehäuse 10 wird dabei oberhalb des gehalterten Kfz-Kennzeichenschilds 2 von einer oberseitig angeordneten Schutzscheibe 70 abgedeckt, welche mittels Verkleben oder Verschweißen mit der vorderseitigen Blende 56, die Teil eines Rahmens 50 der Kennzeichenschildeinheit 40 ist, verbunden ist. Die vorderseitige Blende 56 besteht ebenfalls aus einem schlagzähen thermoplastischen Kunststoff wie ABS und kann beispielsweise mittels Spritzguss gefertigt werden. Die Schutzscheibe 70 besteht bevorzugt aus einem transparenten schlagzähen Kunststoff. Bevorzugt kommt hier aufgrund der hohen Transparenz und der hohen mechanischen Belastbarkeit Polycarbonat zum Einsatz. Denkbar ist jedoch auch die Verwendung von anderen transparenten Kunststoffen wie beispielsweise Polyethylen.

Zusätzlich kann die Vorderfläche der Schutzscheibe 70 durch Aufbringung einer harten und entspiegelnd wirkenden dünnen Schicht hartvergütet sein, wodurch die Kratzfestigkeit der Schutzscheibe 70 erhöht und gleichzeitig ihre Reflektivität herabgesetzt werden kann, was die Lesbarkeit der Kennzeichenlegende des darunter liegenden Kfz-Kennzeichenschild deutlich erhöht.

Weiterhin sind in der vorderseitigen Blende 56 des Rahmens 50 Montageöffnungen 44 vorgesehen, die eine Einführung von Werkzeug erlauben und auf diese Weise eine Trennung von rückseitiger Montageplatte 30 und vorderseitiger Kennzeichenschildeinheit 40 erlauben, worauf im folgenden ebenfalls noch genauer eingegangen wird.

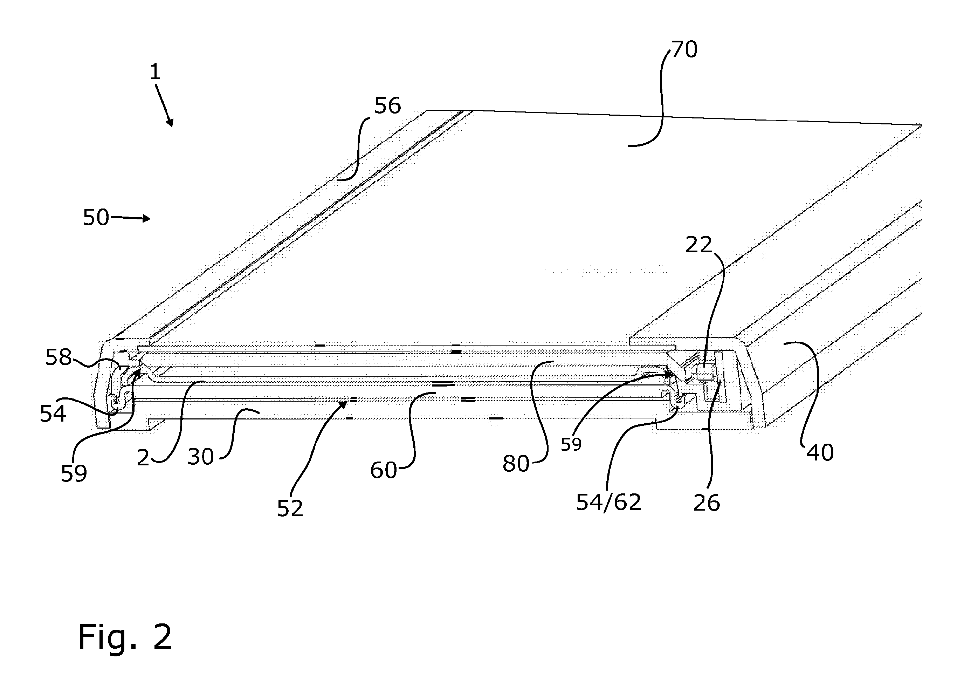

Figur 2 zeigt nun vergrößert eines Ausschnitt des aus Figur 1 ersichtlichen Schnitts durch den erfindungsgemäßen Halter 1, aus dem der Aufbau des erfindungsgemäßen Halters 1 genauer ersichtlich wird. Der erfindungsgemäße Halter 1 umfasst die rückwärtige Montageplatte 30, welche unverlierbar aber lösbar mit der oberseitig angeordneten Kennzeichenschildeinheit 40 verbunden ist.

Die Kennzeichenschildeinheit 40 bildet ein Gehäuse 10 aus, in welchem eine Beleuchtungseinrichtung 20 sowie das zu haltende bzw. zu beleuchtende Kfz-Kennzeichenschild 2 angeordnet ist. Bei dem zu haltenden Kfz-Kennzeichenschild 2 handelt es sich vorzugsweise um ein Kfz-Kennzeichenschild mit metallischer Platine, insbesondere mit geprägter metallischer Platine, bei welchem die Legende in Form erhaben geprägter Ziffern eingebracht ist. Die Beleuchtungseinrichtung 20 umfasst eine Mehrzahl von Lichtquellen 22, welche von einem gemeinsamen Lichtquellenträger 26 getragen werden und gleichmäßig beabstandet angeordnet sind. Bei den Lichtquellen 22 handelt es sich bevorzugt um Weißlicht-Leuchtdioden (LED), welche mit einer niedrigen Betriebsspannung arbeiten und eine hohe optische Ausgangsleistung aufweisen. Diese sind gegenwärtig von einer Mehrzahl von Anbietern erhältlich und weisen den Vorteil einer homogenen Strahlungscharakteristik bei einer hohen Lebensdauer auf. Der hohe Wirkungsgrad von LEDs führt darüber hinaus zu einer nur geringen Wärmeentwicklung.

Die Mehrzahl der Lichtquellen 22 der Beleuchtungseinrichtung 20 ist dabei in einer Längsseite der Kennzeichenschildeinheit 40 angeordnet, wobei die Strahlrichtung der einzelnen Lichtquellen 22 mit der Ebene des Kfz-Kennzeichenschilds 2 zusammenfällt.

Die Lichtquellen 22 werden über eine gemeinsame Versorgungsleitung mit elektrischer Energie versorgt, wobei die hier nicht dargestellte Versorgungsleitung über eine abgedichtete Bohrung aus der Kennzeichenschildeinheit 40 herausgeführt wird.

Zur gleichmäßigen Ausleuchtung des gehaltenen Kfz-Kennzeichenschilds 2 ist oberseitig des Kfz-Kennzeichenschilds 2 ein flächenhaft ausgedehnter Lichtleiter 80 angeordnet, welcher beabstandet vom Kfz-Kennzeichenschild 2 angeordnet ist. In diesen Lichtleiter 80, welcher vorzugsweise aus einem transparenten Kunststoff wie beispielsweise Polycarbonat besteht, wird das von den Lichtquellen 22 ausgesandte Licht auf geeignete Weise eingekoppelt. Auch hierauf wird im Folgenden noch genauer eingegangen. Im Lichtleiter 80 wird das eingekoppelte Licht der Lichtquellen 22 durch innere Totalreflektion geführt. Dabei ist die Oberflächenbeschaffenheit auf seiner oberseitigen Fläche so beschaffen, dass bei jeder internen Totalreflektion ein geringer Prozentsatz der einfallenden Strahlung ausgekoppelt wird. Entsprechende Techniken hierzu sind aus dem Stand der Technik in großer Zahl bekannt. Beispielhaft sei hier die gezielte Einbringung einer Oberflächenrauhigkeit in den Lichtleiter 80 genannt, welche beispielsweise mittels einer geeigneten Matrize bei der Herstellung des Lichtleiters 80 mittels Spritzguss eingebracht werden kann. Durch geeignete Strukturierung der Oberflächenrauhigkeit ist es weiterhin möglich, die längs des Lichtwegs stetig abnehmende Lichtintensität durch Erhöhung des lokalen Auskoppelgrades zu kompensieren, so dass sich insgesamt eine homogene Intensität des oberseitig aus dem Lichtleiters 80 ausgekoppelten Lichts ergibt. Weiterhin ist es möglich, durch gezielte Strukturierung der Oberfläche des Lichtleiters 80 in den an die Lichtquellen 22 angrenzenden Bereichen die im Bereich der Lichtquellen 22 stark erhöhte Intensität im Lichtleiter 80 auszugleichen, indem dort der Auskoppelgrad lokal deutlich abgesenkt wird.

Das Gehäuse 10 der Kennzeichenschildeinheit 40 wird im gezeigten Ausführungsbeispiel aus mehreren Komponenten gebildet. Ein Rahmen 50, welcher eine vorderseitige Blende 56 sowie einen rückseitigen Halter 58 umfasst, die als separate Teile gefertigt werden und im Rahmen der Erstellung des erfindungsgemäßen Halters 1 unlösbar miteinander verbunden werden, beispielsweise mittels Verschweißung, weisen eine vorderseitige Öffnung aus, in die die transparente Schutzscheibe 70 eingesetzt ist. Die transparente Schutzscheibe 70 eingesetzt ist. Die transparente Schutzscheibe 70 ist dabei wie bereits erwähnt, unlösbar mit der vorderseitigen Blende 56 des Rahmens 50 verbunden, beispielsweise mittels Verklebung. Im gezeigten Ausführungsbeispiel sind die vorderseitige Blende 56 sowie der rückseitige Halter 58 jeweils mittels Tiefziehverfahren oder Spritzgussverfahren hergestellt und bestehen jeweils aus einem schlagzähen thermoplastischen Kunststoff wie beispielsweise ABS.

Der Rahmen 50 der Kennzeichenschildeinheit 40 weist rückseitig eine Zutrittsöffnung 52 auf, die sich über die gesamte rückwärtige Fläche des Rahmens 50 erstreckt und deren Abmessungen so bemessen sind, dass durch die Zutrittsöffnung 52 das zu haltende Kfz-Kennzeichenschild 2 in den Rahmen 50 eingelegt werden kann. Wird das Kfz-Kennzeichenschild eingelegt, so gelangt es in Kontakt mit Andruckflächen 59, welche im rückseitigen Halter 58 ausgebildet sind.

Nachdem das Kfz-Kennzeichenschild 2 in den Rahmen 50 eingelegt wurde, wird die Kennzeichenschildeinheit 40 mittels eines Deckels 60 hermetisch verschlossen. Hierzu weist der rückseitige Halter 58 eine umlaufende Dichtleiste 54 auf. Gleichzeitig bildet der Deckel 60 eine umlaufende Aufnahmenut 62 aus, welche in ihrer Formgebung komplementär zur umlaufenden Dichtleiste 54 ausgebildet ist. Das Material des Deckels 60 weist nun eine gegenüber dem Material des Rahmens 50 erhöhte Elastizität auf, wobei die Abmessungen des Deckels 60, hier insbesondere der umlaufenden Aufnahmenut 62, so bemessen sind, dass der Deckel 60 mit seiner umlaufenden Aufnahmenut 62 auf die Dichtleiste 54 des rückseitigen Halters 58 aufgezogen werden kann. Hierbei erfährt der Deckel 60 eine gewisse elastische Dehnung, wodurch der Deckel 60 auf der umlaufenden Dichtleiste 54 festgelegt wird. Als Material für den Deckel 60 haben sich thermoplastische Polyurethane, beispielsweise das von der Firma Bayer Materialscience AG unter der Marke Desmopan ® vertriebene thermoplastische aliphatische Polyurethan bewährt. Dieses weist gegenüber ABS eine erhöhte Elastizität auf, so dass der Deckel 60 in der von Kunststoffboxen aus dem Lebensmittelbereich bekannten Art und Weise auf die Dichtleiste 54 des Rahmens 50 aufgezogen werden kann, wobei sich ein abdichtender Sitz der Dichtleiste 54 in der Aufnahmenut 62 ergibt. Hierdurch wird das von der Kennzeichenschildeinheit 40 ausgebildete Gehäuse 10 durch den Deckel 60 abgedichtet verschlossen.

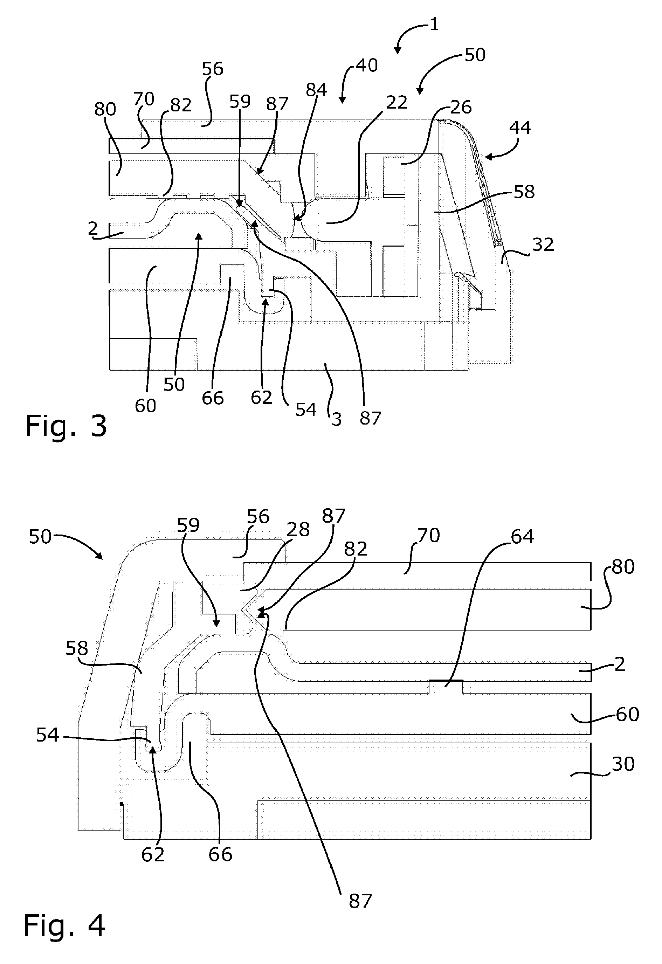

Figur 3 zeigt nun den aus Figur 2 ersichtlichen rechten Rand der Kennzeichenschildeinheit 40 nochmals vergrößert. Deutlich zu erkennen ist der zweiteilige Aufbau des Rahmens 50, welcher aus einer vorderseitigen Blende 56 und dem rückseitigen Halter 58 gebildet ist. Die vorderseitige Blende 56 bildet eine Ausnehmung aus, in die die Schutzscheibe 70 eingesetzt ist.

Der rückseitige Halter 58 bildet gemeinschaftlich mit der vorderseitigen Blende 56 eine Aufnahme für die Mehrzahl der Lichtquellen 22 und den Lichtquellenträger 26 aus. Werden die vorderseitige Blende 56 und der rückseitige Halter 58 zusammengefügt, so werden hierdurch der Lichtquellenträger 56 und die Lichtquellen 26 fixiert.

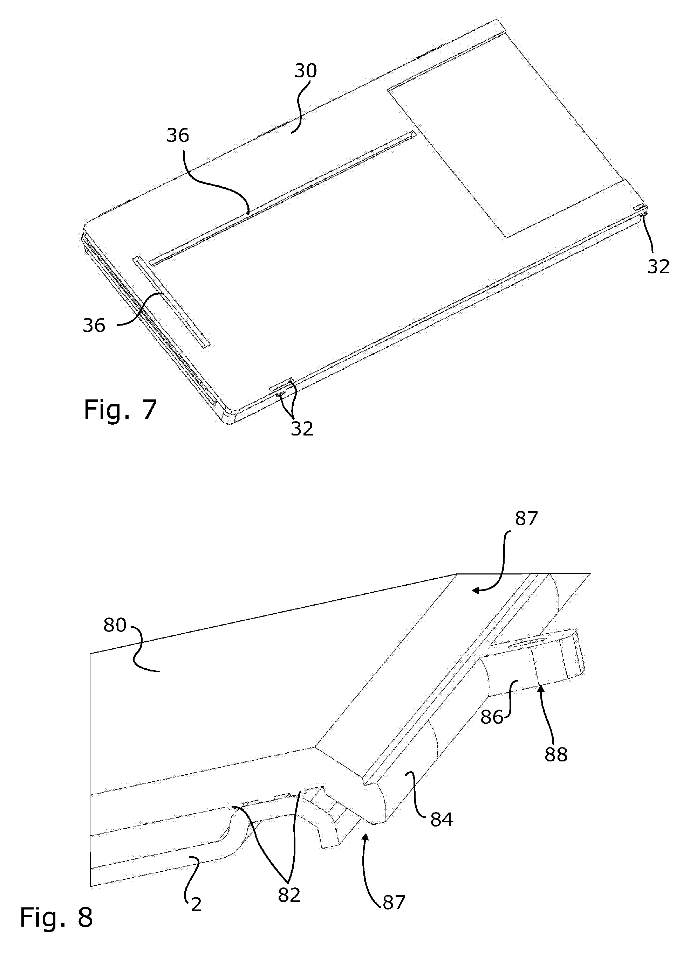

Weiterhin bildet der Lichtleiter 80 an seinen Längsseiten Befestigungsarme 86 aus, die aus Figur 8 zu ersehen sind. In diesen Befestigungsarmen 86 sind Durchgangslöcher 88 ausgebildet, durch die Stifte, welche in der vorderseitigen Blende 56 oder im rückseitigen Halter 58 ausgebildet sind und die in den Figuren nicht dargestellt sind, hindurch greifen können. Zum Zusammenfügen des Rahmens 50 wird der Lichtleiter 80 daher (nach Einkleben der Schutzscheibe 70) mit den Durchgangsbohrungen 88 der Befestigungsarme 86 auf die Stifte der vorderseitigen Blende 56 aufgesetzt. Nachfolgend wird die Beleuchtungseinrichtung 20 mit dem Lichtquellenträger 26, auf der die Mehrzahl von Lichtquellen 22 angeordnet ist, in die vorderseitige Blende 56 eingesetzt. Nachfolgend wird auf die Rückseite der vorderseitigen Blende 56 der rückseitige Halter 58 aufgesetzt und mit der vorderseitigen Blende 56 verschweißt. Hierdurch werden sowohl der Lichtleiter 80 als auch die Beleuchtungseinrichtung 20 im Rahmen 50 festgelegt, insbesondere unverlierbar mit diesem verbunden.

Der Lichtleiter 80 bildet randseitig eine Einkoppelfläche 84 aus, deren Oberflächengeometrie optimal auf die Einkopplung des von den Lichtquellen 22 emittierten Licht abgestimmt ist. Weiterhin bildet der Lichtleiter 80 Reflektionsflächen 87 aus, die so gegen den Lichtweg des im Lichtleiter 80 propagierenden Lichts geneigt sind, dass das Licht stets interne Totalreflektion erfährt und somit im Lichtleiter 80 geführt wird.

Weiterhin ist die Geometrie des Rahmens 50, insbesondere des Lichtleiters 80, so bemessen, dass bei zusammengefügtem Rahmen 50 ein Luftspalt zwischen der vorderseitigen Schutzscheibe 70 und dem Lichtleiter 80 verbleibt, so dass eine Auskopplung des im Lichtleiter 80 geführten Lichts durch eine Einkopplung in die Schutzscheibe 70 möglichst vermieden wird. Indem eine separate Schutzscheibe 70 vorgesehen wird, welche selbst nicht als Lichtleiter der Beleuchtungseinrichtung 20 fungiert, kann eine unerwünschte verstärkte Auskopplung von Licht aus dem Lichtleiter 80 aufgrund von mechanischen Beschädigungen der vorderseitigen Lichtaustrittsfläche des erfindungsgemäßen Halters 1 weitgehend vermieden werden. Würde auf die Schutzscheibe 70 verzichtet, so würden im praktischen Betrieb des erfindungsgemäßen Halters auftretende mechanische Beschädigungen der Oberfläche des Lichtleiters 80 unvermeidlich zur lokalen Änderungen des Auskoppelgrads und somit zu der Ausbildung von "Lichthöfen", insgesamt also zu einer inhomogenen Leuchtverteilung über die Lichtaustrittsfläche des erfindungsgemäßen Halters führen.

Rückseitig bildet der rückseitige Halter 58 Andruckflächen 59 aus. An diesen Andruckflächen 59, kommt ein Kfz-Kennzeichenschild 2, welches vom erfindungsgemäßen Halter 1 gehalten werden soll, zur Anlage, wenn das Kfz-Kennzeichenschild 2 in den Rahmen 50 der Kennzeichenschildeinheit 40 eingelegt wird. Gleichzeitig kommt es zur Anlage mit einer Mehrzahl von Andruckleisten 82, die im Lichtleiter 80 ausgebildet sind.

Ist das zu haltende Kennzeichenschild 2 rückseitig in die Kennzeichenschildeinheit 40 durch die in der Kennzeichenschildeinheit 40 ausgebildete Zutrittsöffnung 52 eingelegt, die sich im gezeigten Ausführungsbeispiel praktisch über die gesamte rückwärtige Fläche des rückseitigen Halters 58 erstreckt, so wird die Zutrittsöffnung 52 des Rahmens 50 mittels eines Deckels 60 hermetisch verschlossen. Hierzu bildet der rückseitige Halter 58 wie bereits erwähnt eine umlaufende Dichtleiste 54 auf. Weiterhin bildet der Deckel 60 eine umlaufende Aufnahmenut 62 aus. Die Formgebung der Dichtleiste 54 und der Aufnahmenut 62 sind dabei so aneinander angepasst, dass sich ein Formschluss zwischen Dichtleiste 54 und Aufnahmenut 62 ergibt, wenn der Deckel 60 rückseitig auf den Rahmen 50 aufgesetzt wird.

Die Abmessungen der Andruckflächen 59 im rückseitigen Halter 58 sowie des Deckels 60 sind so bemessen, dass ein zu haltendes Kfz-Kennzeichenschild 2, welches vorbestimmten nationalen Zulassungsvorschriften entspricht, vorderseitig zur Anlage gelangt an den Andruckleisten 82 des Lichtleiters 80 sowie an den Andruckflächen 59 des rückseitigen Halters 58. Rückseitig gelangt das zu haltende Kfz-Kennzeichenschild 2 zur Anlage an die Innenseite des Deckels 60, auf der insbesondere zusätzlich Andrucknoppen 64, wie sie aus Figur 4 ersichtlich sind, vorgesehen sein können.

Nach Zusammenfügen der vorstehend beschriebenen Komponenten ist die Kennzeichenschildeinheit 40 des erfindungsgemäßen Kennzeichenhalters 1 betriebsbereit.

Die nunmehr fertig gestellte Kennzeichenschildeinheit 40 mit eingesetztem Kfz-Kennzeichen 2 kann nunmehr mit der (beispielsweise mittels Verschraubung fest mit einem Kfz verbundenen) Montageplatte 30 verbunden werden. Für eine solche Verbindung mit dem Kfz sind der in der Montageplatte 30 eine Vielzahl von Montagedurchbrüchen 34 vorgesehen, die bei der Herstellung der Montageplatte 30 mit eingeformt worden sind. Fertigungstechnisch ist es von Vorteil, wenn diese Montagedurchbrüche 34 bei der Fertigung noch nicht vollständig durchbrochen werden.

Zur Befestigung der Kennzeichenschildeinheit an der Montageplatte 30 ist im gezeigten Ausführungsbeispiel an der Montageplatte 30 eine Mehrzahl von Haltevorsprüngen 33 ausgebildet. Diese sind als federnde Zungen ausgestaltet. Weiterhin ist in der Innenseite der vorderseitigen Blende 56 ein umlaufender Verriegelungsvorsprung 57 ausgebildet. Die Haltevorsprünge 32 bildet nach außen gerichtete Nasen aus, welche bei einem Aufstecken der Kennzeichenschildeinheit 40 auf die Montageplatte 30 in Eingriff mit dem umlaufenden Verriegelungsvorsprung 57 gelangen und federnd einrasten. Auf diese Weise wird eine feste Verbindung zwischen der Kennzeichenschildeinheit 40 und der Montageplatte 30 realisiert.

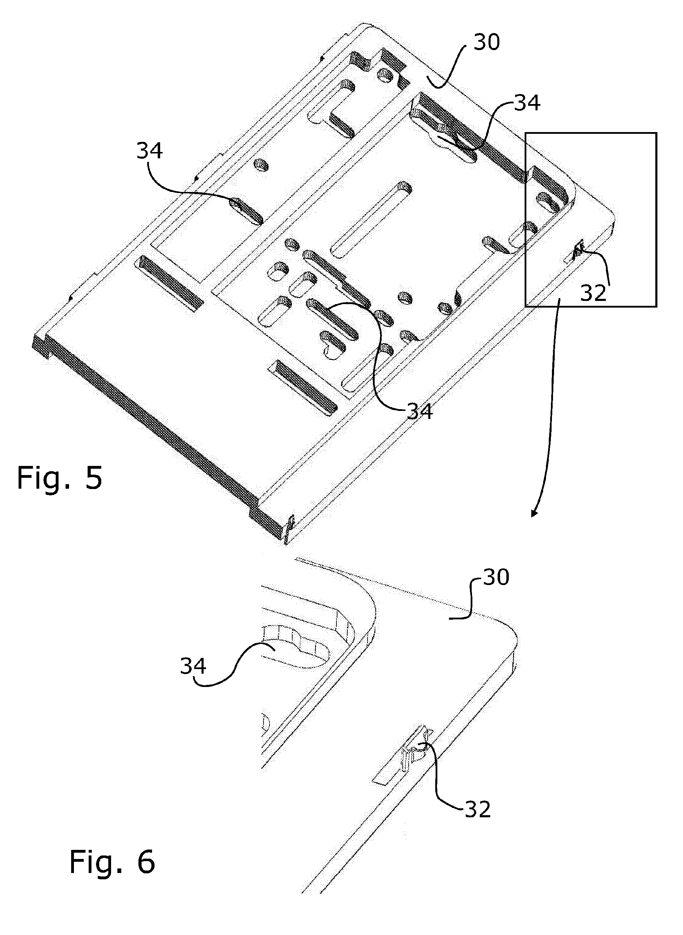

Zur Lösung dieser mechanischen Verbindung sind in der vorderseitigen Blende 56 eine Mehrzahl von Demontageöffnungen 44 ausgebildet, die beispielsweise aus den Figuren 1 und 3 ersichtlich sind. Durch diese Demontageöffnungen 44 kann ein geeignetes Werkzeug eingeführt werden, mit dessen Hilfe die federnden Haltevorsprünge 32 von dem Verriegelungsvorsprung 57 gelöst werden können, sodass die Kennzeichenschildeinheit 40 nach vorne abgezogen werden kann. Die Anordnung der Haltevorsprünge 32 an der Montageplatte 30 ist beispielsweise aus den Figuren 5 und 7 sowie aus Figur 6 zu entnehmen, aus Figur 6 insbesondere in vergrößerter Darstellung.

Figur 4 zeigt nun die in Figur 2 links gelegene Längsseite des erfindungsgemäßen Halters 1 in vergrößerter Darstellung im Schnitt. Im gezeigten Ausführungsbeispiel ist auf dieser Seite der Kennzeichenschildeinheit 40 keine weitere Beleuchtungseinrichtung 20 vorgesehen. Vielmehr ist hier das Ende des Lichtleiters 80 als Retroreflektor ausgebildet, indem zwei unter dem Grenzwinkel der Totalreflektion relativ zum Lichtweg im Lichtleiter 80 die angeordnete Reflektionsflächen 87 ausgebildet sind. Das im Lichtleiter 80 propagierende Licht wird bei Auftreffen auf diese beiden endseitigen Reflektionsflächen 87 um 180° umgelenkt, so dass auf diese Weise die Effizienz der Beleuchtungseinrichtung 20 erhöht wird. Dass Ende des Lichtleiters 80 mit den beiden Reflektionsflächen 87 greift in eine komplementär ausgebildete Führungsschiene 28 ein, die mit dem rückseitigen Halter 58 verbunden oder einstückig mit diesem ausgebildet sein kann.

Aus Figur 4 ist ersichtlich, dass der Deckel 60 Andrucknoppen 64 ausbilden kann, welche ebenfalls dazu dienen, dass zu haltende Kfz-Kennzeichenschild gegen die Andruckflächen 59 des rückseitigen Halters 58 zu pressen. Weiterhin ist zu ersehen, dass längs der äußeren Umrandung des Deckels 60 angrenzend an die umlaufende Aufnahmenut 62 eine Fertigungsausnehmung 66 eingearbeitet ist. Diese Fertigungsausnehmung 66 vereinfacht die Herstellung des Deckels 60 im Spritzgussverfahren.

Figur 7 zeigt eine rückwärtige Ansicht eines Abschnitts der Montageplatte 30 des Halters 1 gemäß des Ausführungsbeispiels. In der Rückseite der Montageplatte 30 sind Kabelführungen 36 ausgebildet, die dazu dienen, die elektrische Versorgungsleitung der Beleuchtungseinrichtung 20 geschützt vor Zugriffen von Außen einer Verbindung mit dem elektrischen Bordnetz des Kraftfahrzeuges zuzuführen.

Figur 8 zeigt schließlich einen vergrößerten Schnitt durch den Lichtleiter 80 des erfindungsgemäßen Halters gemäß des Ausführungsbeispiels. Deutlich zu erkennen ist die zylindrisch ausgebildete Einkoppelfläche 84, die den Austrittsflächen der als Lichtquellen 22 dienenden LEDs gegenüber anliegend angeordnet ist. Von dieser Ankoppelfläche 84 erhebt sich eine Mehrzahl von Befestigungsarmen 86, von denen hier einer nur einer dargestellt ist, und die wie bereits erwähnt mit ihrer Durchgangsbohrung 88 dazu dienen, den Lichtleiter 80 mechanisch fest mit dem Rahmen 50 zu verbinden. Weiterhin zu erkennen sind die stets unter einem Winkel gegenüber dem Lichtweg im Lichtleiter 80 angeordneten Reflektionsflächen 87, der größer ist als der Grenzwinkel der totalen Reflektion für das im Lichtleiter 80 propagierende Licht. Schließlich sind die rückseitig am Lichtleiter 80 ausgebildeten Andruckleisten 82 zu erkennen, über die sich das in den Rahmen eingelegte Kfz-Kennzeichenschild 2 am Lichtleiter 80 abstützt.

Die vorliegende Erfindung realisiert einen Halter für ein Kfz-Kennzeichenschild, welcher eine effektive und homogene Ausleuchtung eines (nicht-transparenten) Kennzeichenschilds erlaubt. Der Halter ist für eine Fertigung in Großserie geeignet und weist eine hohe Dichtheit gegenüber Umwelteinflüssen auf. Mechanische Beschädigungen der vorderseitig angeordneten Lichtaustrittsfläche haben auf die Homogenität der Ausleuchtung des gehaltenen Kfz-Kennzeichenschilds praktisch keinen Einfluss.

### Bezugszeichen

- 1: Halter für Kfz-Kennzeichenschild
- 2: Kfz-Kennzeichenschild
- 10: Gehäuse
- 20: Beleuchtungseinrichtung
- 22: Lichtquelle
- 26: Lichtquellenträger
- 28: Führungsschiene
- 30: Montageplatte
- 32: Haltevorsprung
- 34: Montagedurchbruch
- 36: Kabelführung
- 40: Kennzeichenschildeinheit
- 42: Halteausnehmung
- 44: Demontageöffnung
- 50: Rahmen
- 52: Zutrittsöffnung
- 54: Dichtleiste
- 56: vorderseitige Blende
- 57: Verriegelungsvorrichtung
- 58: rückseitiger Halter
- 59: Andruckfläche
- 60: Deckel
- 62: Aufnahmenut
- 64: Andrucknoppe
- 66: Fertigungsausnehmung
- 70: Schutzscheibe
- 80: Lichtleiter
- 82: Andruckleiste
- 84: Einkoppelfläche
- 86: Befestigungsarm
- 87: Reflektionsfläche
- 88: Durchgangsbohrung

## Patentansprüche

1. Halter (1) für ein Kfz-Kennzeichenschild (2), mit einem geschlossenen Gehäuse (10) und einer darin angeordneten Beleuchtungseinrichtung (20), wobei die Beleuchtungseinrichtung (20) eine oder mehrere Lichtquellen (22) umfasst, deren Licht in einen flächenhaft ausgedehnten Lichtleiter (24) eingekoppelt wird, der vorderseitig vor dem Kfz-Kennzeichenschild (2) angeordnet ist, **dadurch gekennzeichnet, dass** der Halter (1) weiterhin folgendes umfasst:
a. eine rückwärtige Montageplatte (30), die zur Montage an einem Kfz vorgesehen ist,
b. eine Kennzeichenschildeinheit (40), die
i. ein geschlossenes Gehäuse (10) zur abgedichteten Aufnahme der Beleuchtungseinrichtung (20) sowie des Kfz-Kennzeichenschilds (2) ausbildet,
ii. dazu eingerichtet ist, lösbar mit der rückwärtigen Montageplatte (30) verbunden zu werden.

2. Halter (1) gemäß Anspruch 1, **dadurch gekennzeichnet, dass** die Kennzeichenschildeinheit (40)
a. einen Rahmen (50) ausbildet, in den das zu haltende Kfz-Kennzeichenschild (2) über eine Zutrittsöffnung (52) eingelegt werden kann, und
b. einen Deckel (60) ausbildet, der dazu vorgesehen ist, die Zutrittsöffnung (52) abdichtend zu verschließen.

3. Halter (1) gemäß Anspruch 2, **dadurch gekennzeichnet, dass**
a. der Rahmen (50) eine die Zutrittsöffnung (52) umgreifende Dichtleiste (54) ausbildet,
b. der Deckel (60) eine Aufnahmenut (62) zur Aufnahme der Dichtleiste (54) ausbildet,
c. wobei Dichtleiste (54) und Aufnahmenut (62) dergestalt komplementär ausgebildet sind, dass die Dichtleiste (54) formschlüssig in die Aufnahmenut (62) eingreifen kann, wodurch sich eine abgedichtete mechanische Verbindung zwischen Deckel (60) und Rahmen (50) ergibt.

4. Halter (1) gemäß Anspruch 3, **dadurch gekennzeichnet, dass**:
a. der Rahmen (50) aus spritzgießfähigen Thermoplasten wie ABS besteht,
b. der Deckel (60) aus einem Kunststoff mit gegenüber den Thermoplasten des Rahmens (50) erhöhter Elastizität besteht.

5. Halter (1) gemäß Anspruch 4, **dadurch gekennzeichnet, dass** der Deckel (60) aus einem aliphatischen thermoplastischen Polyurethan besteht.

6. Halter gemäß Anspruch 1, **dadurch gekennzeichnet, dass** der Rahmen (50) eine vorderseitig angeordnete Blende (56) und einen rückseitig angeordneten Halter (58) aufweist, wobei zwischen Blende (56) und Halter (58) die Beleuchtungseinrichtung (20) angeordnet ist und von diesen gehalten wird.

7. Halter (1) gemäß Anspruch 6, **dadurch gekennzeichnet, dass** Blende (56) und Halter (58) miteinander verschweißt sind.

8. Halter (1) gemäß Anspruch 1, **dadurch gekennzeichnet, dass**
a. die Montageplatte (30) eine Mehrzahl von federnden Haltevorsprüngen (32) ausbildet,
b. die Kennzeichenschildeinheit (40) zumindest eine komplementär ausgebildete Halteausnehmung (42) ausbildet,
c. wobei die Haltevorsprünge (32) dazu ausgebildet sind, formschlüssig in die zumindest eine Halteausnehmung (42) einzugreifen, um auf diese Weise die Kennzeichenschildeinheit (40) lösbar mit der Montageplatte (30) zu verbinden.

9. Halter (1) gemäß Anspruch 8, **dadurch gekennzeichnet, dass** in der Kennzeichenschildeinheit (40) eine Mehrzahl von Demontageöffnungen (44) ausgebildet sind, die die Einführung eines geeigneten Werkzeugs zulassen, um die formschlüssige Verbindung zwischen federndem Haltevorsprung (32) und Halteausnehmung (42) zu lösen.

10. Halter (1) gemäß Anspruch 1, **dadurch gekennzeichnet, dass** der flächenhaft ausgedehnte Lichtleiter (24) oberseitig von einer transparenten Schutzscheibe (70) abgedeckt ist, die beanstandet vom flächenhaft ausgedehnten Lichtleiter (24) angeordnet ist.

11. Halter (1) gemäß Anspruch 1, **dadurch gekennzeichnet, dass** die transparente Schutzscheibe (70) oberseitig hartvergütet ist.
